# EUROPÄISCHE PATENTSCHRIFT

(11) **EP 1 897 057 B1**
(45) Veröffentlichungstag und Bekanntmachung des Hinweises auf die Patenterteilung: **02.04.2014**
(21) Anmeldenummer: 05772442.9
(22) Anmeldetag: 29.06.2005
(51) Int. Cl.: G06T 5/00

(54) **VERFAHREN ZUR VERZERRUNGSFREIEN DARSTELLUNG**
METHOD FOR A DISTORTION-FREE DISPLAY
PROCEDE POUR UNE REPRESENTATION SANS DISTORSION

(43) Veröffentlichungstag der Anmeldung: 12.03.2008
(73) Patentinhaber: Bayerische Motoren Werke Aktiengesellschaft, 80809 München (DE)
(72) Erfinder: GIEGOLD, Jürgen, 85375 Neufahrn (DE); LOH, Sebastian, 85235 Sittenbach (DE); MANGOLD, Thomas, 81371 München (DE); PINSKER, Martin, 85354 Freising (DE)
(86) Internationale Anmeldenummer: PCT/EP2005/006966
(87) Internationale Veröffentlichungsnummer: WO 2007/000178

(56) Entgegenhaltungen:
- EP-A- 1 460 583
- DE-A1- 10 046 019
- DE-A1- 19 951 001

## Beschreibung

Die Erfindung betrifft ein Verfahren zur verzerrungsfreien Darstellung von aus computergenerierten Bildpunkten zusammengesetzten und an einer nichtebenen Reflexionsfläche, insbesondere einer Windschutzscheibe eines Kraftfahrzeugs, reflektierten Bildelementen, bei welchem in einer Betriebsphase durch eine Recheneinheit abhängig von den Verzerrungseigenschaften der Reflexionsfläche aus originären Bilddaten der Bildelemente vorverzerrte Bilddaten gemäß darstellungsbezogenen Vorverzerrungsparametern errechnet und an eine Anzeigeeinheit übergeben werden, welche die Bildelemente auf die Reflexionsfläche projiziert, und bei welchem zur Gewinnung der darstellungsbezogenen Vorverzerrungsparameter in einer Kalibrierungsphase mindestens ein Bildelement in zur Betriebsphase analoger Vorgehensweise in Form originärer Bilddaten bereitgestellt, vorverzerrt und projiziert wird und Bilddaten des Ergebnisses der Projektion kamera- und bildverarbeitungsbasiert aufgenommen und mit den originären Bilddaten verglichen werden.

Um den Blick und die Konzentration des Fahrers nicht vom Fahrgeschehen abzulenken, werden in modernen Kraftfahrzeugen so genannte Head-Up-Displays eingesetzt, die es ermöglichen, grafische und textuelle Informationen durch eine Reflexion an der Windschutzscheibe in das Sichtfeld des Fahrers einzublenden.

Typischerweise enthält ein Head-Up-Display neben der als Reflexionsfläche wirkenden Windschutzscheibe eine Recheneinheit zum Errechnen von Bilddaten, eine Anzeigeeinheit, welche die Bildelemente auf die Reflexionsfläche projiziert und vor der Reflexionsfläche angeordnete optische Elemente, z.B. Spiegel und/oder Prismen und/oder Linsen, zur Beeinflussung des Strahlengangs des von der Anzeigeeinheit emittierten Lichts.

Die Projektion von computergenerierten Bildern auf eine nichtebene Reflexionsfläche enthält verschiedene Arten von Bildfehlern, die teilweise vom Betrachter unmittelbar wahrgenommen werden, teilweise jedoch subjektiv zunächst nicht erfasst werden, im Extremfall und bei längerer Betrachtung eines fehlerhaften Bildes jedoch zu Unbehagen, Gleichgewichtsstörungen und Kopfschmerz führen können. Diese Fehler werden, insbesondere bei den oben beschriebenen Head-Up-Displays für Kraftfahrzeuge, typischerweise durch die folgenden wesentliche Bildfehlerquellen beeinflusst.

Vorhersehbare Bildfehlerquellen ergeben sich beispielsweise aus der grundlegenden Form einer Reflexionsfläche und deren grundlegender Anordnung bezogen auf die Anzeigeeinheit und die optischen Elemente. Im Kraftfahrzeugbereich werden typischerweise für unterschiedliche Fahrzeugtypen unterschiedliche Typen von Windschutzscheiben, die insbesondere unterschiedliche Wölbungscharakteristika besitzen, verwendet und in unterschiedlicher Art und Weise montiert. Solche vorhersehbaren Bildfehlerquellen sind der Haupteinflussfaktor für subjektiv nicht wahrnehmbare Bildfehler. Vorhersehbare Bildfehlerquellen sind in der Regel statischer Natur, d.h. nicht von der Augposition des Betrachters abhängig.

Unvorhersehbare Bildfehlerquellen ergeben sich aus Fertigungs- und Einbautoleranzen. Dies kann sowohl die Reflexionsfläche selbst, als auch eine bilderzeugende Anzeigeeinheit oder zwischengeschaltete optische Mittel betreffen. Diese unvorhersehbaren Bildfehlerquellen wirken sich bei geeigneter Konfiguration der Projektionsoptik meist nur unwesentlich, d.h. innerhalb des Akzeptanzbereichs des Betrachters, auf subjektiv nicht wahrnehmbare Bildfehler aus. Der Einfluß der unvorhersehbaren Bildfehlerquellen auf subjektiv direkt erkennbare Bildfehler ("Verzerrungen") liegt jedoch häufig deutlich oberhalb der Wahrnehmungsschwelle des Betrachters. Die unvorhersehbaren Bildfehlerquellen verursachen sowohl statische als auch dynamische, d.h. von der Augposition des Betrachters abhängige Verzerrungen.

Die statischen vorhersehbaren Bildfehlerquellen können durch entsprechend konfigurierte optische Elemente weitgehend kompensiert werden, insbesondere, um subjektiv nicht direkt wahrnehmbare Bildfehler zu kompensieren. Dies entspricht dem Stand der Technik. Durch solche optischen Elemente lassen jedoch naturgemäß keine unvorhersehbaren Bildfehlerquellen kompensieren. Unvorhersehbare Bildfehlerquellen, die durch Herstellungstoleranzen der Projektionsoptik verursacht werden, können in begrenztem Umfang durch eine nachträgliche Feinpositionierung der Anzeigeeinheit und/oder der optischen Elemente kompensiert werden. Eine solche Feinpositionierung ist jedoch sehr zeit- und arbeitsaufwändig und kann nur von einem geübten Fachmann durchgeführt werden. Zudem ist das Erreichen eines zufriedenstellenden Ergebnisses nicht immer gewährleistet. Dynamische Bildfehlerquellen bleiben gänzlich unberücksichtigt.

Aus der DE 100 46 019 A1 ist ein Verfahren zur verzerrungsfreien Darstellung von aus computergenerierten Bildpunkten zusammengesetzten und an einer nichtebenen Reflexionsfläche reflektierten Bildelementen bekannt, in welchem in einem von einer Computereinheit durchgeführten Korrekturschritt die Bildelemente vor ihrer Reflexion an der Reflexionsfläche vorverzerrt werden. Der Korrekturschritt erfolgt dadurch, dass die Koordinaten jedes Bildpunkts durch ein Vorverzerrungsprogramm als Funktion der Verzerrungseigenschaften der Reflexionsfläche in vorverzerrte Koordinaten umgerechnet werden. Die DE 100 46 019 A1 beschreibt zur Durchführung des Korrekturschritts ein tabellenbasiertes Verfahren, bei welchem die vorverzerrten Koordinaten jedes Bildpunkts durch Addition seiner zuvor berechneten Koordinaten mit Verschiebungskoordinaten, die diesen Koordinaten zugeordnet sind, berechnet werden. Zur Gewinnung der Verschiebungskoordinaten wird ein projiziertes Testbild mit einer Kamera aufgenommen und daraufhin die aufgenommenen Bilddaten mit den ursprünglich bereitgestellten Bilddaten verglichen. Das in der DE 100 46 019 A1 beschriebene Verfahren besitzt verschiedene Nachteile. Zum einen kann durch die Vorverzerrung lediglich die Wirkung statischer Bildfehlerquellen kompensiert werden. Zum anderen kann die Darstellung nur für die Betrachtung aus der Position der Kamera optimiert werden. Dies führt in der Regel zu einem suboptimalen Ergebnis bei der Betrachtung aus anderen Betrachtungspositionen. Beispielsweise können durch eine Optimierung der Darstellung für eine einzige Betrachtungsposition Überkorrekturen in den Randbereichen verursacht werden. Ein weiterer wesentlicher Nachteil eines Verfahrens gemäß der DE 100 46 019 A1 betrifft speziell die Betriebsphase des Head-Up-Displays. Das beschriebene, in der Betriebsphase des Head-Up-Displays ablaufende, tabellenbasierte Verfahren ist bei hoher Bildauflösung sehr speicherplatzintensiv und rechenaufwändig. Eine Übertragung des Verfahrensprinzips auf Verfahren zur Kompensation dynamischer Bildfehlerquellen, die einen fließenden Wechsel zwischen verschiedenen Tabellen erfordern würden, ist mit der typischerweise zu vertretbaren Kosten an Bord eines Kraftfahrzeugs zur Verfügung stellbaren Rechenleistung und Speicherkapazität für grafische Prozesse nicht realisierbar. Eine Steigerung der Rechenleistung und/oder Speicherkapazität wäre mit hohen Zusatzkosten verbunden. Die Übertragung sämtlicher Daten ins Kraftfahrzeug wäre mit langen Kodierzeiten verbunden.

Aus dem Dokument DE 199 51 001 A1 ist eine Vorrichtung zur Darstellung von Informationen in einem Fahrzeug bekannt, die Mittel zur optischen Darstellung von Information aus verschiedene Datenquellen, Mittel zur Blickrichtungserkennung eines Fahrers des Fahrzeugs und einen mit diesen Mitteln verbundenen Rechner aufweist. Der Rechner erhält von den Mitteln zur Blickrichtungserkennung die Blickrichtung des Fahrers und übermittelt sie an die Mittel zur optischen Darstellung, welche die Informationen in Abhängigkeit von der Blickrichtung des Fahrers darstellen.

Der Erfindung liegt die Aufgabe zugrunde, ein kamerabasiertes Verfahren zu schaffen, durch welches eine verzerrungsfreie Betrachtung aus verschiedenen Betrachtungspositionen und/oder Betrachtungswinkeln ermöglicht wird.

Die Aufgabe wird erfindungsgemäß gelöst durch ein Verfahren zur verzerrungsfreien Darstellung von aus computergenerierten Bildpunkten zusammengesetzten und an einer nichtebenen Reflexionsfläche reflektierten Bildelementen gemäß dem unabhängigen Anspruch 1.

Insbesondere eignet sich ein erfindungsgemäßes Verfahren zur verzerrungsfreien Darstellung von an einer Windschutzscheibe eines Kraftfahrzeugs reflektierten Bildelementen.

Eine wesentliche Besonderheit eines erfindungsgemäßen Verfahrens gegenüber Verfahren gemäß dem Stand der Technik besteht darin, dass in der Kalibrierungsphase mehrere, mindestens zwei, Bilddatensätze des Ergebnisses der Projektion aus verschiedenen Kamerapositionen und/oder Kamerablickwinkeln aufgenommen werden.

Durch die Aufnahme mehrerer, mindestens zweier, Bilddatensätze aus verschiedenen Kamerapositionen und/oder Kamerablickwinkeln wird es ermöglicht, die Darstellung, beispielsweise die Darstellung eines Head-Up-Displays, durch die Verwendung geeigneter darstellungsbezogener Vorverzerrungsparameter so abzustimmen, dass sich aus verschiedenen Betrachtungspositionen und/oder Betrachtungswinkeln eine verzerrungsfreie oder annähernd verzerrungsfreie Darstellung ergibt.

Die Erfindung trägt unter anderem der Tatsache Rechnung, dass bei der Betrachtung aus unterschiedlichen Betrachtungspositionen und/oder Betrachtungswinkeln unterschiedliche Bereiche der Oberflächen und/oder Volumina der beteiligten optischen Elemente darstellungswirksam sind. Um die Wirkung von Bildfehlerquellen kompensieren, welche verschiedene Bereiche der optischen Elemente betreffen, müssen Bilddaten zu mehreren Betrachtungspositionen und/oder Betrachtungswinkeln zur Verfügung stehen.

Für die Darstellung der in einem bestimmten Zeitschritt darzustellenden Bildelemente wird jeweils lediglich ein einziger darstellungsbezogener Vorverzerrungsparametersatz benötigt. Der für den jeweiligen Zeitschritt optimale darstellungsbezogene Vorverzerrungsparametersatz hängt jedoch von der im jeweiligen Zeitschritt aktuellen Betrachtungsposition und/oder dem im jeweiligen Zeitschritt aktuellen Betrachtungswinkel ab. Je nach Ausführungsform eines erfindungsgemäßen Verfahrens wird entweder für jeden Zeitschritt ein optimaler darstellungsbezogener Vorverzerrungsparametersatz bestimmt und verwendet oder es wird ein einziger darstellungsbezogener Vorverzerrungsparametersatz ermittelt, der für verschiedene Betrachtungspositionen und/oder Betrachtungswinkel eine zufriedenstellende Darstellungsqualität erwarten lässt.

Die in der Betriebsphase zur Vorverzerrung zu verwendenden darstellungsbezogenen Vorverzerrungsparameter werden gemäß verschiedener Ausführungsformen der Erfindung auf der Basis von in der Kalibrierungsphase gewonnenen temporären Vorverzerrungsparametersätzen ermittelt. Die temporären Vorverzerrungsparametersätze sind typischerweise jeweils einer bestimmten Betrachtungsposition und/oder einem bestimmten Betrachtungswinkel zugeordnet.

Gemäß einer einfachen Ausführungsform der Erfindung wird für sämtliche Kamerapositionen und/oder Kamerablickwinkel, zu denen Bilddaten aufgenommen wurden, in an sich bekannter Weise jeweils ein temporärer Vorverzerrungsparametersatz durch einen Vergleich der aufgenommenen Bilddatensätze mit den originären Bilddaten gewonnen. Die hierzu für die verschiedenen Kamerapositionen und/oder Kamerablickwinkel durchzuführenden Arbeitsschritte sind einander sehr ähnlich und bedeuten keine wesentliche Steigerung des Vorbereitungsaufwands für die Kalibrierungsphase. Insbesondere wenn die Kalibrierungsphase zeitlich nicht mit der Betriebsphase zusammenfällt, ist eine eventuelle Steigerung der Durchführungszeit dieses Teils der Kalibrierungsphase in der Regel problemlos tolerierbar.

Der Vergleich aufgenommener und originärer Bilddaten und/oder die Bestimmung temporärer Vorverzerrungsparametersätze kann erfindungsgemäß vollständig oder teilweise durch eine nur in der Kalibrierungsphase mit der Recheneinheit des Head-Up-Displays verbundene Zusatzrecheneinheit durchgeführt werden.

Statt eines unmittelbaren Vergleichs der aufgenommenen Bilddatensätze für sämtliche Kamerapositionen und/oder Kamerablickwinkel mit den originären Bilddaten ist gemäß komplizierterer Ausführungsformen der Erfindung eine der Ermittlung temporärer Vorverzerrungsparametersätze vorgelagerte gemeinsame Verarbeitung aufgenommener Bilddatensätze denkbar. Die ermittelten temporären Vorverzerrungsparametersätze können sich dann auf von den Kamerapositionen und/oder Kamerablickwinkeln verschiedene Betrachtungspositionen und/oder Betrachtungswinkel beziehen.

Alternativ kann die Ermittlung temporärer Vorverzerrungsparametersätze gemäß bestimmter Ausführungsformen der Erfindung entfallen. Aus den aufgenommenen Bilddaten wird dann direkt eine Datenbasis zur Ermittlung eines geeigneten darstellungsbezogenen Vorverzerrungsparametersatzes gewonnen.

Die Bildaufnahme in der Kalibrierungsphase kann gemäß einer ersten Variante eines erfindungsgemäßen Verfahrens dadurch erfolgen, dass die aufgenommenen Bilddatensätze mittels einer einzigen Kamera zeitlich nacheinander aus verschiedenen Kamerapositionen und/oder Kamerablickwinkeln aufgenommen werden. Die Verwendung einer einzigen Kamera verringert insbesondere den zur Durchführung eines erfindungsgemäßen Verfahrens erforderlichen Vorrichtungsaufwand.

Alternativ kann die Bildaufnahme aus verschiedenen Kamerapositionen und/oder Kamerablickwinkeln in der Kalibrierungsphase gemäß einer zweiten Variante eines erfindungsgemäßen Verfahrens dadurch erfolgen, dass mittels mehrerer, mindestens zweier, in verschiedenen Positionen und/oder Blickrichtungen angebrachter Kameras jeweils mindestens ein Bilddatensatz aufgenommen wird. Die Verwendung mehrerer Kameras verringert, insbesondere wenn diese zeitlich parallel oder mit geringem Zeitversatz verwendet werden und/oder wenn diese mechanisch, beispielsweise durch eine gemeinsame Trägereeinheit, untereinander verbunden werden, den Positionierungsaufwand für die Kameras und gegebenenfalls den Zeitaufwand für die Bildaufnahme.

Besonders vorteilhaft kann sich in dieser Hinsicht die vollständige zeitliche Parallelisierung der Bildaufnahme und/oder die vollständige gerätetechnische Entkopplung der Bildaufnahme der einzelnen Bilddatensätze auswirken. Zur vollständigen gerätetechnischen Entkopplung der Bildaufnahme der einzelnen Bilddatensätze wird gemäß einer Weiterbildung der zweiten Variante der Erfindung in der Kalibrierungsphase mittels mindestens zweier in verschiedenen Positionen und/oder Blickrichtungen angebrachter Kameras jeweils genau ein Bilddatensatz aufgenommen.

In dem Fall, dass ein erfindungsgemäßes Verfahren zur verzerrungsfreien Darstellung von auf eine Windschutzscheibe eines Kraftfahrzeugs projizierten Bildelementen angewendet wird, werden die zur Bildaufnahme verwendeten Kameras bevorzugt ausschließlich zur Bildaufnahme in der Kalibrierungsphase im Kraftfahrzeug positioniert und/oder am Kraftfahrzeug angebracht.

Gemäß einer Weiterbildung der Erfindung erfolgt sowohl in der Kalibrierungsphase als auch in der Betriebsphase zusätzlich zur Vorverzerrung durch die Recheneinheit eine Vorverzerrung durch optische Elemente. Die optischen Elemente sind dazu in an sich bekannter Weise zwischen der Anzeigeeinheit und der Reflexionsfläche anzuordnen. Ihre Wirkung ist bei der erfindungsgemäßen Vorverzerrung zu berücksichtigen.

Gemäß einer besonders bevorzugten Variante dieser Weiterbildung der Erfindung wird die Wirkung vorhersehbarer statischer Bildfehlerquellen weitgehend durch die optischen Elemente kompensiert.

Gemäß einer ersten bevorzugten Ausführungsform der Erfindung wird in der Kalibrierungsphase ein einziger für die Verwendung in der Betriebsphase vorgesehener darstellungsbezogener Vorverzerrungsparametersatz ermittelt und dieser einzige darstellungsbezogene Vorverzerrungsparametersatz wird in allen Zeitschritten der Betriebsphase zur Berechnung vorverzerrter Bilddaten unabhängig von der aktuellen Betrachtungsposition und/oder dem aktuellen Betrachtungswinkel verwendet. Dieser einzige darstellungsbezogene Vorverzerrungsparametersatz ist von der aktuellen Betrachtungsposition und/oder dem aktuellen Betrachtungswinkel unabhängig. Ein solcher einziger darstellungsbezogener Vorverzerrungsparametersatz muss erfindungsgemäß so beschaffen sein, dass unter seiner Verwendung eine im Mittel, gegebenenfalls im gewichteten Mittel, optimale Darstellungsqualität, insbesondere Verzerrungsfreiheit, über eine Vielzahl von Betrachtungspositionen und/oder Betrachtungswinkel gegeben ist. Idealerweise ergibt sich für den gesamten Wertebereich möglicher Betrachtungspositionen und/oder Betrachtungswinkel eine zufriedenstellende Darstellungsqualität.

Der einzige darstellungsbezogene Vorverzerrungsparametersatz wird im einfachsten Fall durch eine entsprechende, ggf. gewichtete, Mittelwertbildung aus für verschiedene Betrachtungspositionen und/oder Betrachtungswinkel gewonnenen temporären Vorverzerrungsparametersätzen ermittelt. Durch eine eventuelle unterschiedliche Gewichtung der Betrachtungspositionen und/oder Betrachtungswinkel bzw. der den Betrachtungspositionen und/oder Betrachtungswinkeln zugeordneten temporären Vorverzerrungsparametersätze können zu Gunsten einer besseren Darstellungsqualität für besonders häufig auftretende Betrachtungspositionen und/oder Betrachtungswinkel bewusst Abstriche hinsichtlich der Darstellungsqualität für nur in Ausnahmesituationen relevante Betrachtungspositionen und/oder Betrachtungswinkel in Kauf genommen werden.

Durch die Optimierung eines, ggf. gewichteten, Mittelwerts der Darstellungsqualität über eine Vielzahl von Betrachtungspositionen und/oder Betrachtungswinkel wird zwar in der Regel nicht das Optimum der Darstellungsqualität für eine bestimmte Betrachtungsposition und/oder einen bestimmten Betrachtungswinkel bewirkt. Jedoch wird durch die beschriebene erste bevorzugte Ausführungsform der Erfindung der Einfluss statischer Bildfehlerquellen besser kompensiert als dies durch Vorrichtungen gemäß dem Stand der Technik möglich wäre. Bei geschickter Auslegung kann zudem der Einfluss dynamischer Bildfehlerquellen, insbesondere eines Wechsels der Betrachtungsposition und/oder des Betrachtungswinkels, reduziert werden. Dies wird möglich, da die darstellungsbezogenen Vorverzerrungsparameter und die Projektion der Anzeigeeinheit erfindungsgemäß anders als gemäß dem Stand der Technik nicht für einen einzigen Augpunkt optimiert sind.

Gemäß einer zweiten bevorzugten Ausführungsform der Erfindung erfolgt in der Kalibrierungsphase keine Festlegung auf einen einzigen für die Verwendung in der Betriebsphase vorgesehenen darstellungsbezogenen Vorverzerrungsparametersatz. Stattdessen wird in der Kalibrierungsphase eine Datenbasis für die von der aktuellen Betrachtungsposition und/oder dem aktuellen Betrachtungswinkel abhängige Ermittlung darstellungsbezogener Vorverzerrungsparameter ermittelt. Die Ermittlung des tatsächlich verwendeten darstellungsbezogenen Vorverzerrungsparametersatzes erfolgt abhängig von der aktuellen Betrachtungsposition und/oder dem aktuellen Betrachtungswinkel erst in der Betriebsphase auf Basis der in der Kalibrierungsphase ermittelten Datenbasis.

Im einfachsten Fall werden in der Kalibrierungsphase mehrere, mindestens zwei, verschiedene temporäre Vorverzerrungsparametersätze gewonnen und in einer Look-Up-Tabelle gespeichert. Die gespeicherten temporären Vorverzerrungsparametersätze dienen in diesem einfachsten Fall in der Betriebsphase als Datenbasis zur Ermittlung des tatsächlich zu verwendenden darstellungsbezogenen Vorverzerrungsparametersatzes. Für Betrachtungspositionen und/oder Betrachtungswinkel, zu welchen ein temporärer Vorverzerrungsparametersatz gespeichert wurde, kann dieser direkt als darstellungsbezogener Vorverzerrungsparametersatz verwendet werden. Zwischen- und Randwerte der Betrachtungsposition und/oder des Betrachtungswinkels werden durch, z. B. lineare oder polynomiale, Inter- und/oder Extrapolation ermittelt.

Atternativ kann eine in der Kalibrierungsphase generierte Datenbasis zur Ermittlung eines darstellungsbezogenen Vorverzerrungsparametersatzes abhängig von der aktuellen Betrachtungsposition und/oder dem aktuellen Betrachtungswinkel als kontinuierliche Funktion oder als Kennfeld ausgebildet sein.

Besonders vorteilhaft ist die Gewinnung und Speicherung einer Datenbasis, die es erlaubt, einen darstellungsbezogenen Vorverzerrungsparametersatz für eine bestimmte Betrachtungsposition und/oder einen bestimmten Betrachtungswinkel mit sehr geringem Aufwand und/oder in sehr kurzer Zeit zu ermitteln, da hierdurch der Rechenaufwand und/oder die Rechenzeit in der Betriebsphase gering gehalten wird. Bei einer dynamischen Veränderung der Betrachtungsposition und/oder des Betrachtungswinkels kann somit eine schritthaltende Anpassung des verwendeten darstellungsbezogenen Vorverzerrungsparametersatzes vorgenommen werden.

Die zweite bevorzugte Ausführungsform der Erfindung ist insbesondere dann sehr vorteilhaft, wenn die Betrachtungsposition und/oder der Betrachtungswinkel, d. h. die Augenposition und/oder die Blickrichtung des Fahrers, bekannt ist. Gemäß einer Weiterbildung dieser zweiten bevorzugten Ausführungsform der Erfindung wird in der Betriebsphase die Augenposition und/oder Blickrichtung des Fahrers des Kraftfahrzeugs laufend messtechnisch erfasst und/oder laufend ein Schätzwert für die Augenposition und/oder Blickrichtung des Fahrers errechnet und es wird ein für die aktuell gemessene und/oder geschätzte Augenposition und/oder Blickrichtung passender Vorverzerrungsparametersatz ermittelt.

Durch die beschriebene zweite bevorzugte Ausführungsform der Erfindung kann der Einfluss dynamischer Bildfehlerquellen, insbesondere eines Wechsels der Betrachtungsposition und/oder des Betrachtungswinkels, vollständig kompensiert werden.

Aus der EP 0 946 893 B1 ist ein Informationsanzeigesystem für mindestens eine Person bekannt, bei welchem eine durch die Wölbung einer Windschutzscheibe bewirkte, von der Betrachterposition abhängige, Verzerrung ausgeglichen wird, indem von einem als Anzeigeeinheit fungierendem Videodisplay eine dazu inverse Verzerrung dargestellt und in die Windschutzscheibe eingespiegelt wird. Um die von dem Videodisplay abgegebenen Darstellungen immer in das Auge des Anwenders fallen zu lassen, ist es aus der EP 0 946 893 B1 bekannt, eine auf die Person ausgerichtete Videokamera vorzusehen, die den Ort der Augen der Person oder des Anwenders feststellt und verfolgt und ein optisches Mittel entsprechend steuert. Die Videokamera liefert aus der Beobachtung des Fahrers die notwendigen Positionskoordinaten, so daß das jeweils anzuzeigende Bild auf dem Videodisplay entsprechend elektronisch entzerrt wird. Die Herstellung vorverzerrter Bilder kann gemäß der EP 0 946 893 B1 durch Probieren erfolgen oder mit CAD-Daten der Windschutzscheibe und Strahlengang-Berechnungsprogrammen berechnet werden. Der wesentliche Nachteil der in der EP 0 946 893 B1 beschriebenen Vorgehensweise gegenüber einem erfindungsgemäßen Verfahren besteht jedoch darin, dass ein Probieren in der Praxis sehr zeit- und arbeitsaufwändig ist, nur vom Fachmann durchgeführt werden kann und das Erreichen eines zufriedenstellenden Ergebnisses nicht immer gewährleistet ist. Die Herstellung vorverzerrter Bilder mit CAD-Daten der Windschutzscheibe und Strahlengang-Berechnungsprogrammen kann wiederum nur die Wirkung vorhersehbarer statischer Bildfehlerquellen kompensieren.

Die bisherigen Ausführungen beziehen sich auf die schritthaltende Bereitstellung eines zur verzerrungsfreien Darstellung geeigneten darstellungsbezogenen Vorverzerrungsparametersatzes. Für die Durchführung einer hierzu erforderlichen Vorverzerrung in der Betriebsphase sind verschiedene Verfahren bekannt.

Verfahren gemäß dem Stand der Technik verwenden häufig eine tabellenbasierte Koordinatenverschiebung. Solche Verfahren sind, wie bereits eingangs erwähnt, in der Regel im Kraftfahrzeug nicht schritthaltend durchführbar.

Gemäß einer Weiterbildung der Erfindung wird für eine schritthaltende Durchführung der Vorverzerrung auf Basis des für den jeweiligen Zeitschritt ermittelten darstellungsbezogenen Vorverzerrungsparametersatzes ein polygon- oder polynombasiertes Vorverzerrungsverfahren angewendet. Dieses ermöglicht die mathematische Beschreibung auch komplexer Verzerrungen mit einer vergleichsweise geringen Zahl an Parametern. Dennoch sind Polynome höchst einfach zu berechnen, was die Integration der Berechnung vorverzerrter Darstellungen aus vorkalibrierten Vorverzerrungsparametersätzen auch in FPGA- oder ASIC-Designs ermöglicht. Aufgrund der Eigenschaften der für die Bilderzeugung verwendeten Elemente sowie der Projektionsfläche (z. B. Frontscheibe) lassen sich die durch Fertigungstoleranzen verursachten Bildfehler mit Hilfe eines polynombasierten Vorverzerrungsverfahrens so korrigieren, daß die verbleibenden Verzerrungen unterhalb der menschlichen Wahrnehmungsgrenze liegen. Ein solches Polygon- oder Polynomverfahren ermöglicht auf speziellen, heute im Kraftfahrzeug einsetzbaren, Grafikprozessoren Echtzeitfähigkeit auch bei schnellen Veränderungen der Betrachtungsposition und/oder des Betrachtungswinkels.

Erfindungsgemäß wird ein geeigneter Grafik-Prozessor (z.B. Fujitsu Coral-Familie, Silicon Optix T1 / W1) als Recheneinheit oder als Teil der Recheneinheit für die Vorverzerrung verwendet. Solche Grafik-Prozessoren können zu projizierende Bilddaten entweder über Polygonzüge (Fujitsu) oder über Polynome bis 5ter Ordnung verzerren bzw. vorverzerren. Durch die Anwendung polygon- oder polynombasierter Verfahren wird die Anzahl der bereitzustellenden und zu verarbeitenden Vorverzerrungsparameter erheblich reduziert. Die erforderliche Kodierzeit in einer am Fertigungsplatz stattfindenden Kalibrierungsphase wird gegenüber tabellenbasierten Verfahren erheblich verkürzt. Grafik-Prozessoren der genannten Art erlauben nach der Vorverzerrung der zu pojizierenden Bilddaten auch ein entsprechendes Anti-Aliasing, was die für die Vorverzerrung erforderliche Auflösung des Displays der Projektionseinheit reduziert und somit die Kosten senkt.

Das in der Kalibrierungsphase ablaufende Verfahren zur Gewinnung einer für ein polygon- oder polynombasiertes Verfahren geeigneten Datenbasis ist auf die Anforderungen an die in der Betriebsphase benötigte Datenbasis abzustimmen. Gemäß einer besonders vorteilhaften Ausführungsform der Erfindung werden die in der Kalibrierungsphase durchzuführenden Rechenoperationen, insbesondere die Ermittlung eines einzigen darstellungsbezogenen Vorverzerrungsparametersatzes oder die Ermittlung einer Datenbasis für die von der aktuellen Betrachtungsposition und/oder dem aktuellen Betrachtungswinkel abhängige Ermittlung der darstellungsbezogenen Vorverzerrungsparameter, vollständig oder teilweise durch eine nur in der Kalibrierungsphase mit der Recheneinheit verbundene Zusatzrecheneinheit durchgeführt.

Die Displayfläche einer in einem erfindungsgemäßen Verfahren eingesetzten Anzeigeeinheit muss für die gleiche effektive Projektionsfläche größer sein als in einem Verfahren ohne rechentechnisch realisierte Vorverzerrung, weil Bildpunkte auf dem Display durch die Vorverzerrung außerhalb der bisherigen Displayfläche erscheinen müssen.

Die Auflösung des Displays der Anzeigeeinheit muss so hoch sein, dass der Bildpunktabstand der projizierten Bildelemente kleiner ist als die Auflösungsgrenze des menschlichen Auges. Liegt der Bildpunktabstand im projizierten Bild geringfügig oberhalb der Auflösungsgrenze des menschlichen Auges, kann ein Postfilter-Antialiasing helfen, Digitalisierungseffekte der Vorverzerrung zu vermeiden.

Anhand der beigefügten Zeichnungen wird die Erfindung im Folgenden weiter erläutert. Dabei zeigen schematisch
- Fig. 1: die prinzipiellen Verfahrensschritte einer bevorzugten Ausführungsform eines erfindungsgemäßen Verfahrens und
- Fig. 2: den Wertebereich möglicher Augenpositionen des Fahrers eines Kraftfahrzeugs sowie verschiedene in der bevorzugten Ausführungsform eines erfindungsgemäßen Verfahrens zur Bildaufnahme verwendeten Kamerapositionen.

Bei einem Head-Up-Display in einem Kraftfahrzeug werden grafische und textuelle Informationen durch eine Reflexion an der Windschutzscheibe des Kraftfahrzeugs in das Sichtfeld des Fahrers eingeblendet. Das Head-Up-Display umfasst im Wesentlichen eine Recheneinheit, welche die darzustellenden Bildelemente generiert, eine Anzeigeeinheit, welche die Bildelemente auf die Windschutzscheibe projiziert, zwischen der Anzeigeeinheit und der Windschutzscheibe angeordnete optische Elemente, hier ein Spiegelsystem, zur Beeinflussung des Strahlengangs des von der Anzeigeeinheit emittierten Lichts.

Durch die Wirkung der optischen Elemente bei der Projektion auf die Windschutzscheibe wird die verzerrende Wirkung der Grundform der Windschutzscheibe und deren Anordnung bezüglich der Anzeigeeinheit und der optischen Elemente, insbesondere auch die subjektiv nicht wahrnehmbaren Bildfehler, reduziert, aber für keine Betrachtungsposition vollständig kompensiert.

Um eine verzerrungsfreie Darstellung aus Sicht des Fahrers zu erhalten, werden die darzustellenden Bildelemente in der Recheneinheit vor der Projektion gemäß darstellungsbezogener Vorverzerrungsparameter vorverzerrt.

Die Recheneinheit generiert in einer durch den Fahrer des Kraftfahrzeugs aktivierbaren Betriebsphase des Head-Up-Displays vorverzerrte zu projizierende Bilddaten mit einer vorgegebenen Aktualisierungsrate.

Gemäß einer bevorzugten Ausführungsform eines erfindungsgemäßen Verfahrens wird im vorliegenden Ausführungsbeispiel in der Recheneinheit für jeden Zeitschritt schritthaltend ein Satz darstellungsbezogener Vorverzerrungsparameter bestimmt und für die Vorverzerrung im jeweiligen Zeitschritt verwendet.

Bei Verfügbarkeit eines kamerabasierten Systems zur Bestimmung und Verfolgung der Augposition und Blickrichtung des Fahrers (Eye-Tracking-System), welche im vorliegenden Ausführungsbeispiel gemäß einer bevorzugten Weiterbildung der Erfindung angenommen wird, kann die Bestimmung des darstellungsbezogenen Vorverzerrungsparametersatzes abhängig von der aktuellen Augenposition des Fahrers aus einer Polynomfunktion erfolgen und somit eine auf die Augposition des Fahrers abgestimmte und somit wesentlich verzerrungsfreiere Darstellung erreicht werden.

Die Augenposition des Fahrers wird durch das Eye-Tracking-System quasikontinuierlich gemessen und mit einer vorgegebenen Aktualisierungsrate an die Recheneinheit übergeben. Die Polynomfunktion zur Bestimmung des darstellungsbezogenen Vorverzerrungsparametersatzes abhängig von der aktuellen Augenposition des Fahrers wurde in einer zeitlich vor der Betriebsphase ablaufenden Kalibrierungsphase bestimmt.

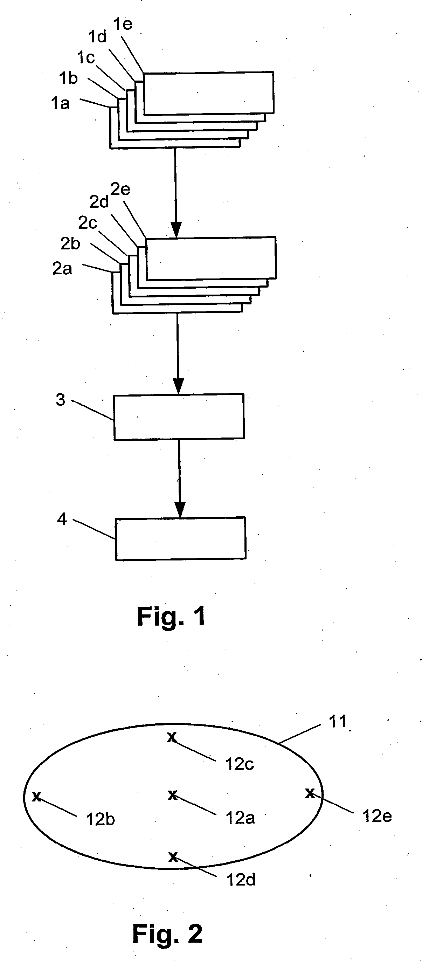

Fig. 1 zeigt die prinzipiellen Verfahrensschritte sowohl der Kalibrierungs- als auch der Betriebsphase der hier beschriebenen bevorzugten Ausführungsform eines erfindungsgemäßen Verfahrens.

In der Kalibrierungsphase wird zunächst durch. mehrere, hier fünf, auf ein gemeinsames Trägergerüst montierte Kameras jeweils ein Bilddatensatz, hier ein Bild in voller Kameraauflösung, eines von dem Head-Up-Display auf die Windschutzscheibe projizierten Testbilds aufgenommen. Alternativ kann auch mit nur einer, verfahrbar angebrachten, Kamera gearbeitet werden. Wichtig ist die Gewinnung von Bilddaten aus mehreren Positionen in der so genannten Eyebox (z. B. den Ecken).

Die Recheneinheit des Head-Up-Displays verwendet für die Vorverzerrung des Testbilds einen initialen darstellungsbezogenen Vorverzerrungsparametersatz. Dieser kann je nach genauer Ausführungsform des Verfahrens so ausgebildet sein, dass sich bei dessen Verwendung keinerlei Vorverzerrung oder nur eine verschwindende Vorverzerrung ergibt, oder er kann, beispielsweise als Mittelwert von Vorverzerrungsparametersätzen, welche zuvor in Kraftfahrzeugen desselben Typs für die Augenposition eines aufrecht sitzenden Fahrers durchschnittlicher Größe bestimmt wurden, so ausgebildet sein, dass die durch die Windschutzscheibe und die optischen Elemente bedingte Verzerrung des projizierten Bildes weitestgehend kompensiert wird.

Die durch die fünf Kameras aufgenommenen Bilddaten - die Bildaufnahme ist in Fig. 1 dargestellt durch die fünf Verfahrensschritte 1 a, 1b, 1c, 1d und 1e - werden derselben Bildverarbeitung zugeführt werden. Die Bildverarbeitung erfolgt im vorliegenden Ausführungsbeispiel durch eine von der in der Betriebsphase verwendeten Recheneinheit des Head-Up-Displays verschiedene Zusatzrecheneinheit mit größerer Speicherkapazität und Rechenleistung.

Die Kamerapositionen sind so gewählt, dass sich eine gute Abdeckung des Wertebereichs möglicher Augenpositionen eines Fahrers des Kraftfahrzeugs ergibt. Fig. 2 zeigt schematisch den statistisch ermittelten Wertebereich 11 möglicher Augenpositionen des Fahrers für einen bestimmten Kraftfahrzeugtyp sowie die fünf im beschriebenen Ausführungsbeispiel zur Bildaufnahme verwendeten Kamerapositionen 12a, 12b, 12c, 12d und 12e. Die zentrale Kameraposition 12a entspricht der Augenposition eines aufrecht sitzenden Fahrers durchschnittlicher Größe. Die Kamerapositionen 12b, 12c, 12d und 12e entsprechen vier extremen Augenpositionen nahe unterschiedlicher Grenzen des Wertebereichs 11. Die Kamerapositionen 12a, 12b, 12c, 12d und 12e können, müssen aber nicht, innerhalb einer Ebene liegen.

Um die fünf genannten Augenpositionen möglichst genau durch entsprechende Kamerapositionierung in den Positionen 12a, 12b, 12c, 12d und 12e reproduzieren zu können, sind die Kameras (bzw. bei Verwendung nur einer Kamera mit Verfahrmöglichkeit: die Kamera incl. Verfahrmimik) fest auf ein Trägergerüst montiert, welches wiederum selbst durch Einrastung am Türrahmen der Fahrertür definiert relativ zum Kraftfahrzeug positioniert wird. Das Trägergerüst und die Kameras werden ausschließlich zur Bildaufnahme in der Kalibrierungsphase im oder am Kraftfahrzeug angebracht.

Der Zusatzrecheneinheit werden neben den Bilddatensätzen der Kameras ebenfalls die unverzerrten zu projizierenden Bilddaten des Head-Up-Displays zugeführt. Auf Basis eines an sich bekannten Korrelationsverfahrens, welches die Bilddatensätzen der Kameras mit den unverzerrten zu projizierenden Bilddaten vergleicht, errechnet die Zusatzrecheneinheit daraufhin für jeden aufgenommenen Kamerabilddatensatz einen temporären Vorverzerrungsparametersatz. Die Berechnung der fünf temporären Vorverzerrungsparametersätze ist in Fig. 1 durch die Verfahrensschritte 2a, 2b, 2c, 2d und 2e dargestellt.

Aus den fünf temporären Vorverzerrungsparametersätzen und den zugehörigen Kamerapositionen wird im Verfahrensschritt 3 durch die Zusatzrecheneinheit eine polynombasierte Datenbasis zur Ermittlung eines darstellungsbezogenen Vorverzerrungsparametersatzes abhängig von der aktuellen Augenposition des Fahrers ermittelt und an die Recheneinheit des Head-Up-Displays übergeben. Die Kalibrierungsphase ist mit Abschluss des Verfahrensschritts 3 abgeschlossen.

Der in Fig. 1 dargestellte Verfahrensschritt 4 besteht in der bereits zuvor beschriebenen verzerrungsfreien Visualisierung durch das Head-Up-Display auf Basis der in der Kalibrierungsphase gewonnenen Datenbasis zur Ermittlung eines darstellungsbezogenen Vorverzerrungsparametersatzes abhängig von der aktuellen Augenposition des Fahrers.

## Patentansprüche

1. Verfahren zur verzerrungsfreien Darstellung von aus computergenerierten Bildpunkten zusammengesetzten und an einer nichtebenen Reflexionsfläche, insbesondere einer Windschutzscheibe eines Kraftfahrzeugs, reflektierten Bildelementen, bei welchem in einer Betriebsphase durch eine Recheneinheit abhängig von den Verzerrungseigenschaften der Reflexionsfläche aus originären Bilddaten der Bildelemente vorverzerrte Bilddaten gemäß darstellungsbezogenen Vorverzerrungsparametern errechnet und an eine Anzeigeeinheit übergeben werden, welche die Bildelemente auf die Reflexionsfläche projiziert, und bei welchem zur Gewinnung der darstellungsbezogenen Vorverzerrungsparameter in einer Kalibrierungsphase mindestens ein Bildelement in zur Betriebsphase analoger Vorgehensweise in Form originärer Bilddaten bereitgestellt, vorverzerrt und projiziert wird und Bilddaten des Ergebnisses der Projektion kamera- und bildverarbeitungsbasiert aufgenommen und mit den originären Bilddaten verglichen werden,
wobei in der Kalibrierungsphase mindestens zwei Bilddatensätze des Ergebnisses der Projektion aus verschiedenen Kamerapositionen (12a, 12b, 12c, 12d, 12e) und/oder Kamerablickwinkeln aufgenommen werden, daraus ein einziger für die Verwendung in der Betriebsphase vorgesehener darstellungsbezogener Vorverzerrungsparametersatz ermittelt wird und
dieser einzige darstellungsbezogene Vorverzerrungsparametersatz in der Betriebsphase unabhängig von der aktuellen Betrachtungsposition und/oder dem aktuellen Betrachtungswinkel zur Berechnung der vorverzerrten Bilddaten verwendet wird.

2. Verfahren nach Anspruch 1, **dadurch gekennzeichnet,**
**dass** die Bilddatensätze in der Kalibrierungsphase mittels einer einzigen Kamera zeitlich nacheinander aus verschiedenen Kamerapositionen **(12a, 12b, 12c, 12d, 12e)** und/oder Kamerablickwinkeln aufgenommen werden.

3. Verfahren nach Anspruch 1, **dadurch gekennzeichnet,**
**dass** in der Kalibrierungsphase mittels mindestens zweier in verschiedenen Positionen und/oder Blickrichtungen angebrachter Kameras jeweils mindestens ein und/oder genau ein Bilddatensatz aufgenommen wird.

4. Verfahren nach einem der Ansprüche 1 bis 3, **dadurch gekennzeichnet, dass** sowohl, in der Kalibrierungsphase als auch in der Betriebsphase zusätzlich zur Vorverzerrung durch die Recheneinheit eine Vorverzerrung durch vor der Reflexionsfläche angeordnete optische Elemente erfolgt.

5. Verfahren nach einem der Ansprüche 1 bis **4, dadurch gekennzeichnet, dass** die in der Kalibrierungsphase durchzuführenden Rechenoperationen, insbesondere der Vergleich aufgenommener Bilddaten mit originären Bilddaten und/oder die Ermittlung einer Datenbasis für die von der aktuellen Betrachtungsposition und/oder dem aktuellen Betrachtungswinkel abhängige Ermittlung der darstellungsbezogenen Vorverzerrungsparameter, vollständig oder teilweise durch eine nur in der Kalibrierungsphase mit der Recheneinheit verbundene Zusatzrecheneinheit durchgeführt werden.

6. Verfahren nach einem der Ansprüche 1 bis 5, **dadurch gekennzeichnet, dass** das Verfahren zur verzerrungsfreien Darstellung von auf eine Windschutzscheibe eines Kraftfahrzeugs projizierten Bildelementen angewendet wird und dass die zur Bildaufnahme verwendeten Kameras ausschließlich zur Bildaufnahme in der Kalibrierungsphase im Kraftfahrzeug positioniert und/oder am Kraftfahrzeug angebracht werden.

## Claims

1. A method for the distortion-free displaying of image elements composed of computer-generated pixels and reflected on a non-planar reflection surface, more especially a windscreen of a motor vehicle, wherein pre-distorted image data are calculated in an operating phase by a computer unit, depending on the distortion properties of the reflection surface, from original image data of the image elements in accordance with display-related pre-distortion parameters and passed to a display unit, which projects the image elements onto the reflection surface, and wherein, to obtain the display-related pre-distortion parameters, in a calibrating phase, at least one image element is provided, pre-distorted and projected in the form of original image data in a procedure analogous to the operating phase and image data of the result of the projection are recorded on the basis of camera and image processing and compared with the original image data, wherein, in the calibrating phase, at least two image data sets of the result of the projection from different camera positions (12a, 12b, 12c, 12d, 12e) and/or camera viewing angles are recorded, a single display-related pre-distortion parameter set provided for use in the operating phase is determined therefrom and this single display-related pre-distortion parameter set is used in the operating phase independently of the current observation position and/or the current observation angle to calculate the pre-distorted image data.

2. A method according to claim 1, **characterised in that** the image data sets are recorded in the calibrating phase by means of a single camera chronologically in succession from different camera positions (12a, 12b, 12c, 12d, 12e) and/or camera viewing angles.

3. A method according to claim 1, **characterised in that** at least one and/or precisely one image data set is recorded in each case in the calibrating phase by means of at least two cameras provided in different positions and/or viewing directions.

4. A method according to any one of claims 1 to 3, **characterised in that** both in the calibrating phase and in the operating phase, a pre-distortion takes place by means of optical elements arranged in front of the reflection surface in addition to the pre-distortion by the computer unit.

5. A method according to any one of claims 1 to 4, **characterised in that** the computing operations to be carried out in the calibrating phase, more especially the comparison of recorded image data with original image data and/or the determination of a data base for the determination of the display-related pre-distortion parameters depending on the current observation position and/or the current observation angle are carried out completely or partially by an additional computer unit linked to the computer unit only in the calibrating phase.

6. A method according to any one of claims 1 to 5, **characterised in that** the method for the distortion-free displaying of image elements projected onto a windscreen of a motor vehicle is applied and **in that** the cameras used for image recording are positioned in the motor vehicle and/or provided on the motor vehicle exclusively for image recording in the calibrating phase.

## Revendications

1. Procédé permettant une représentation sans distorsion d'éléments d'image rassemblés à partir de points d'image générés par ordinateur et réfléchis sur une surface de réflexion non plane, en particulier un pare-brise de véhicule automobile, selon lequel, dans une phase d'exploitation on calcule selon des paramètres de pré-distorsion relatifs à la représentation des données d'image pré-distordues à partir des données d'image d'origine des éléments d'image et en fonction des caractéristiques de distorsion de la surface de réflexion au moyen d'une unité de calcul, et on les transmet à une unité d'affichage qui projette les éléments d'image sur la surface de réflexion, selon lequel, pour obtenir les paramètres de pré-distorsion relatifs à la représentation, dans une phase de calibrage, on effectue la préparation, la pré-distorsion et la projection d'au moins un élément d'image d'une manière analogue à la phase d'exploitation sous la forme de données d'image d'origine et on prélève les données d'image du résultat de la projection par caméra et traitement d'image et on les compare aux données d'image d'origines, selon lequel, dans la phase de calibrage, on prélève au moins deux jeux de données d'image du résultat de la projection à partir de positions de caméra (12a, 12b, 12c, 12d, 12e) différentes et/ou d'angles de visée de caméra différents, de façon à en déduire un seul jeu de paramètres de pré-distorsion relatifs à la représentation destinés à être utilisés dans la phase d'exploitation, et
on utilise ce seul jeu de paramètres de pré-distorsion relatifs à la représentation dans la phase d'exploitation, indépendamment de la position de visualisation actuelle et/ou de l'angle de visualisation actuel pour calculer les données d'images pré-distordues.

2. Procédé conforme à la revendication 1,
**caractérisé en ce que**
dans la phase de calibrage on prélève les jeux de données d'image chronologiquement les uns après les autres à partir de positions de caméra (12a, 12b, 12c, 12d, 12e) et/ou d'angles de visée de caméra différents, au moyen d'une seule caméra.

3. Procédé conforme à la revendication 1,
**caractérisé en ce que**
dans la phase de calibrage, on prélève respectivement au moins un et/ou exactement un jeu de données d'image au moyen d'au moins deux caméras placées dans des positions et/ou des directions de visée différentes.

4. Procédé conforme à l'une des revendications 1 à 3,
**caractérisé en ce que**
dans la phase de calibration ainsi que dans la phase d'exploitation, en plus de la pré-distorsion au moyen de l'unité de calcul, on effectue une pré-distorsion au moyen d'éléments optiques montés en avant de la surface de réflexion.

5. Procédé conforme à l'une des revendications 1 à 4,
**caractérisé en ce qu'**
on effectue les opérations de calcul devant être effectuées dans la phase de calibrage, en particulier la comparaison des données d'image prélevées avec les données d'image d'origine et/ou la détermination d'une base de données pour la détermination des paramètres de pré-calibrage relatifs à la représentation dépendant de la position de visualisation actuelle et/ou de l'angle de visualisation actuel en totalité ou partiellement au moyen d'une unité de calcul supplémentaire reliée à l'unité de calcul uniquement dans la phase de calibrage.

6. Procédé conforme à l'une des revendications 1 à 5,
**caractérisé en ce que**
l'on utilise ce procédé pour la représentation sans distorsion d'éléments d'image projetés sur un pare-brise de véhicule, et les caméras utilisées pour le prélèvement d'image sont positionnées dans le véhicule et/ou montées sur le véhicule exclusivement pour le prélèvement d'image dans la phase de calibrage.
